Europäisches Patentamt

European Patent Office

Office européen des brevets

(11) Veröffentlichungsnummer: **0 389 436**
A2

(12) **EUROPÄISCHE PATENTANMELDUNG**

(21) Anmeldenummer: **90810211.4**

(22) Anmeldetag: **19.03.90**

(51) Int. Cl.5: **A47B 57/36**

(30) Priorität: **21.03.89 CH 1033/89**

(43) Veröffentlichungstag der Anmeldung:
**26.09.90 Patentblatt 90/39**

(84) Benannte Vertragsstaaten:
**AT BE DE FR GB IT NL**

(71) Anmelder: **Fehlbaum & Co.**
**Käppeligasse 22**
**CH-4125 Riehen(CH)**

(72) Erfinder: **Korth, Bernd**
**Bühlstrasse 54**
**D-7858 Weil am Rhein(DE)**

(74) Vertreter: **Eschmann, Heinz et al**
**A. Braun, Braun, Héritier, Eschmann AG**
**Patentanwälte Holbeinstrasse 36-38**
**CH-4051 Basel(CH)**

(54) **Traggestell.**

(57) Zwei freistehende Rohrsäulen (1, 2) mit zur Rohrlängsachse parallelen Schlitzen (3) zur Aufnahme von Auslegern oder Stützanordnungen sind nach dem Baukostenprinzip mittels einer Querverbindung (4) form- und kraftschlüssig miteinander verbunden. Die Querverbindung (4) aus zwei Verbindungsröhren (5, 6) enthalten an ihren Enden je ein Ausschlussgehäuse (8), in welchem einerseits diese beiden Verbindungsröhren (5, 6) form- und kraftschlüssig gehalten sind, und anderseits eine Spannkonsole (13) mit Einrastnasen (16) untergebracht ist. Die Einrastnasen (16) sind für den Eingriff in die Schlitze (3) der Rohrsäulen (1, 2) bestimmt. Jedes der Anschlussgehäuse (8) ist brustseitig mit einer zur Säulenaussenkontur komplementären Oberflächenkontur versehen, und eine die Spannkonsole (13) gegen das Anschlussgehäuse vorspannende Spannschraube (17) bewirkt eine form- und kraftschlüssige Andruckverbindung zwischen den Anschlussgehäusen (8) und den Rohrsäulen (1, 2).

Fig. 2

# Traggestell

Die vorliegende Erfindung bezieht sich auf ein Traggestell nach dem Oberbegriff des Patentanspruchs 1.

Es ist bekannt, an nach dem Baukastenprinzip aufgebauten Traggestellen mit zwei oder mehr voneinander beabstandeten Stützsäulen, die auf individuellen Fussanordnungen stehen, zwischen benachbarten Säulen einhängbare Traversen einzubauen, wobei zur Erzielung einer belastbaren Anordnung jeweils mindestens zwei einzelne Stabelemente in unterschiedlichen Höhenlagen anzuordnen sind. Weil solche Traversen üblicherweise im Schnapp-oder Schwerkrafteingriff mit den Stützsäulen stehen und zu ihrer Handhabung ohne Werkzeug lösbar sein müssen, sind so aufgebaute Traggestelle nur solange stabil, als eine angemessene Belastung auch der Traversen vorliegt. Sind dagegen Gestelle mit stark wechselnden Belastungen und komplizierten Grundrisskonfigurationen zu erstellen, so erweisen sich Schnapp- und Schwerkrafteingriffe als ungenügende Verbindungsmassnahmen.

Wesentlich schwieriger sind Traggestelle dieser Art zu realisieren, wenn die Traversen aus gestalterischen Gründen eng nebeneinander und ausserdem noch in Fussnähe angeordnet werden müssen, weil hier auch mit einer präzisen Eingriffspassung kaum rüttelfeste Verbindungen herstellbar sind.

Die Aufgabe der vorliegenden Erfindung besteht somit in der Schaffung eines Traggestells nach dem Baukastenprinzip, bei dem Traversen in Mehrfach-Stabelementanordnungen mittels herkömmlichen Hakeneingriffsmitteln an Säulenpaaren eng nebeneinander liegend stabil anbaubar sind.

Die erfindungsgemässe Lösung dieser Aufgabe geht aus dem Patentanspruch 1 hervor. Ausführungsformen des erfindungsgemässen Traggestelles sind durch die abhängigen Ansprüche definiert.

Ein Ausführungsbeispiel des erfindungsgemässen Traggestells ist nachstehend anhand der Zeichnung erläutert. Es zeigt:

Fig. 1 eine Gestellvariante mit zwei freistehenden Stützsäulen,

Fig. 2 das Gestell nach Fig. 1 mit einer Anschlusseinrichtung im Vertikalschnitt,

Fig. 3 die Anschlusseinrichtung der Säulenverbindung mit mehr Details auseinandergezogen und in grösserem Massstab, und

Fig. 4 den Schnitt nach der Linie IV - IV in Fig. 3.

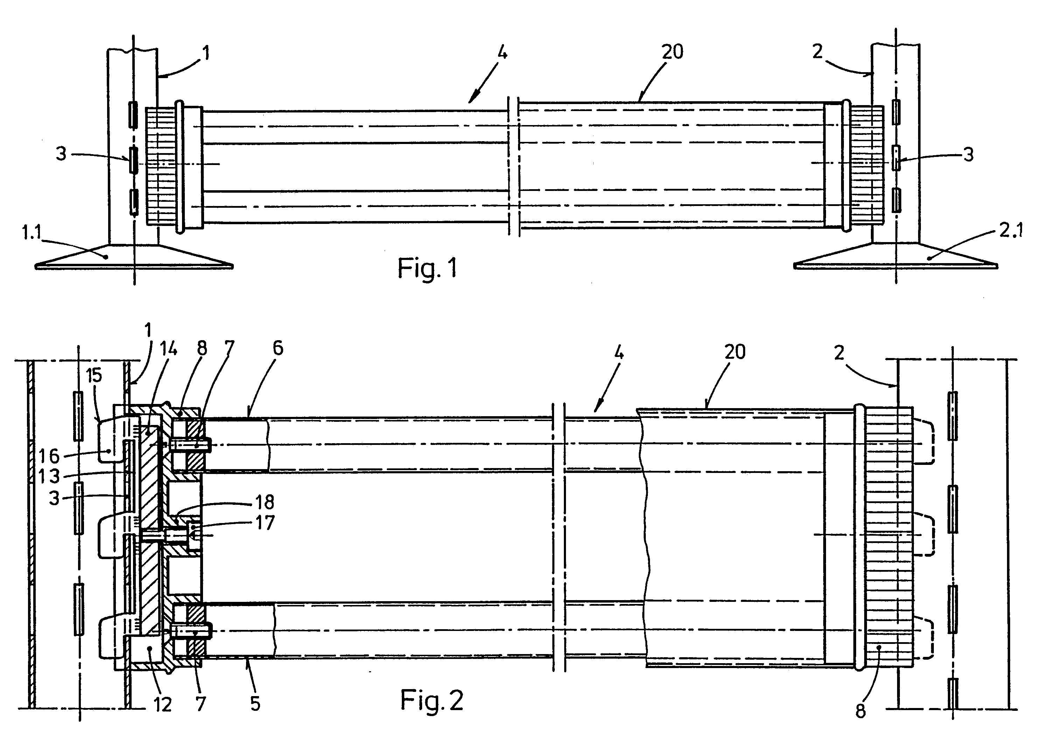

Fig. 1 zeigt zwei Rohrsäulen 1 und 2, die durch schematisch angedeutete Fussanordnungen 1.1, 2.1 eigenstandfest gestaltet und zur Ausrüstung mit Auslegern oder Stützanordnungen zur Warenpräsentation auf bekannte Weise mit Längsachs-parallelen Einhängeschlitzen 3 versehen sind. Zur Sicherung der Standfestigkeit der Säulen 1, 2 sind diese mittels einer im untern Säulenbereich, vorzugsweise in deren Fussbereich angeordneten Querverbindung 4 kraftschlüssig miteinander verbunden. Der Vorteil einer solchen Verbindungsanordnung besteht darin, dass der grösste Teil der Säulenlänge für die Anordnung von Warentragelementen an einem stabilen, aus System teilen nach dem Baukastenprinzip aufgebauten Traggestell zur Verfügung steht.

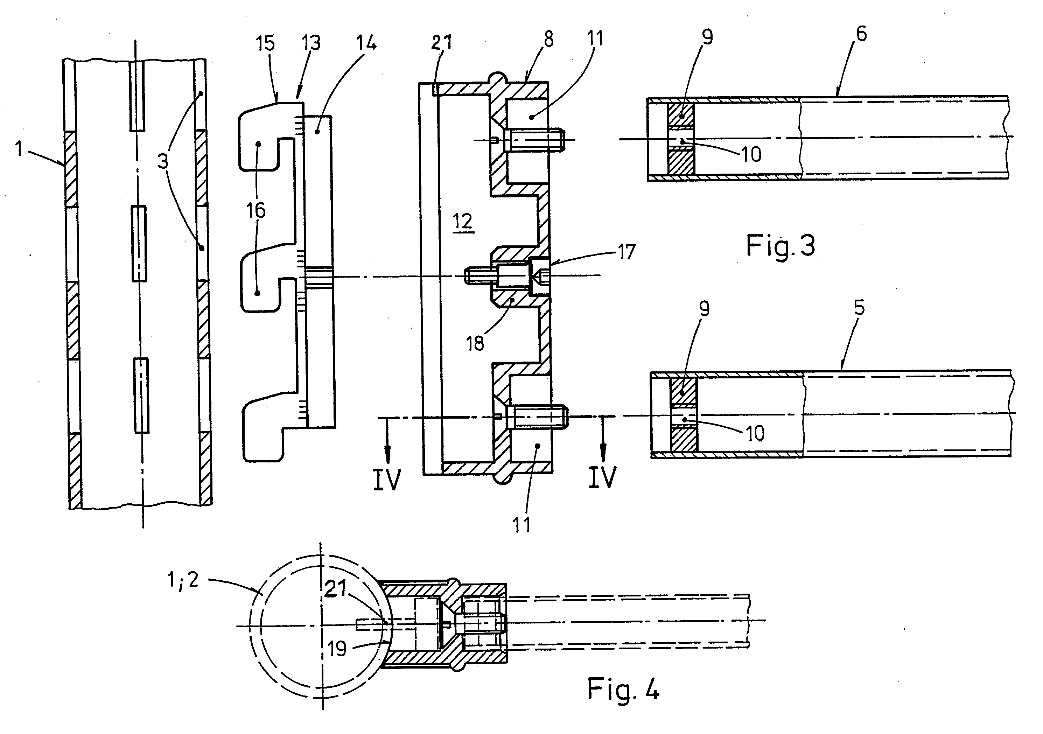

Fig. 2 zeigt in grösserem Massstab links eine Anschlusseinrichtung im Schnitt. Zwei im vertikalen Abstand parallellaufende Verbindungsröhren 5, 6 sind mittels Schrauben 7 fest in einem Anschlussgehäuse 8 verankert. Wie aus Fig. 3 hervorgeht, enthalten die Verbindungsröhren 5, 6 Verankerungsplatten 9 mit einer zentralen Gewindebohrung 10. Die Rohrenden sitzen in Passausnehmungen 11 des Anschlussgehäuses 8 und sind nach Fig. 2 durch die Schrauben 7 lösbar mit diesem verbunden. Diese Art der Rohrbefestigung erlaubt dem Anwender des erfindungsgemässen Traggestells, Verbindungsröhren 5, 6 der jeweils passenden Länge beim Aufbau eines Gestells einzusetzen.

Das Anschlussgehäuse 8 besitzt eine brustseitige Aufnahmeöffnung 12, in der eine Spannkonsole 13, bestehend aus einer Basisplatte 14 und einem darauf aufgeschweissten Einraststeg 15 mit beispielsweise drei Einrastnasen 16, gelagert ist. Beim Zusammenbau der Querverbindung 4 (Fig. 1) ist die Spannkonsole 13 zunächst durch eine Spannschraube 17, die in einem Gehäusesteg 18 gelagert ist, lose in ihrer Aufnahmeöffnung 12 gehalten. Nach dem Anschliessen der Querverbindung 4 an die beiden Säulen 1 und 2, wobei die Nasen 16 der Spannkonsole 13 bezügliche Schlitze 3 durchsetzen und dabei die Rohrwand hintergreifen, wird die Spannschraube 17 festgezogen. Dadurch legen sich die Einrastnasen 16 innenseitig und die Brustfläche 19 (Fig. 4) des Anschlussgehäuses 8 aussenseitig form- und kraftschlüssig an die bezügliche Stützsäule 1, 2 an.

Um zu verhindern, dass sich bei einem unerwünschten oder zufälligen leichten Lockern der Spannschraube 17 die Querverbindung 4 von der zugeordneten Rohrsäule 1, 2 abheben lässt, besitzt das Anschlussgehäuse 8 (Fig. 3, 4) auf seiner Oberseite einen die Brustfläche 19 radial einwärts überragenden Sperrnocken 21. Dieser untergreift bei in die zugeordneten Schlitze 3 eingeführten Einrastnocken 16 die obere Schmalseitenwand des von der obersten Einrastnase 16 belegten Schlitzes 3 und verhindert, in seiner Funktion als Anschlagelement, dass die Querverbindung 4 von der bezüglichen Säule 1, 2 abgehoben werden kann. Ein Abheben der Querverbindung 4 von einer der Säulen 1, 2 kann somit erst dann erfolgen, wenn das Anschlussgehäuse 8 um ein der Säulenwandstärke entsprechendes Mass von der Säule weggezogen werden kann.

Die Brustfläche 19 des Anschlussgehäuses 8 besitzt eine zur Aussenkontur der Stützsäule 1, 2 komplementäre Oberflächenkontur. Der Kopf der Spannschraube 17 bleibt für das Handhaben der Querverbindung 4 stets zugänglich und kann durch eine die Verbindungsröhren 5, 6 abdeckende, umgekehrt-U-förmige Blende 20 (Fig. 1, 2) versteckt werden.

Es versteht sich, dass die Querverbindung 4 anstelle von zwei Verbindungsröhren 5, 6 auch, unter Erweiterung des Anschlussgehäuses 8, mit drei oder mehr Verbindungsröhren 5, 6 gestaltet sein kann. Desgleichen ist die Anzahl der Einrastnasen 16 an den Spannkonsolen 13 nicht auf drei beschränkt. Es können auch Spannkonsolen mit zwei oder vier Einrastnasen 16 verwendet werden.

**Ansprüche**

1. Traggestell mit zwei oder mehr freistehenden Rohrsäulen (1, 2), die mit zur Längsachse parallelen Schlitzen (3) zur Aufnahme von Auslegern oder Stützanordnungen versehen sind, und einer benachbarte Rohrsäulen (1, 2) nach dem Baukastenprinzip form- und kraftschlüssig miteinander kuppelnden Querverbindung (4), dadurch gekennzeichnet, dass die Querverbindung (4) aus zwei oder mehr an ihren beiden Enden in je einem Anschlussgehäuse (8) lösbar festgelegten Verbindungsröhren (5, 6) bestehen, dass die Anschlussgehäuse (8) je eine Spannkonsole (13) mit der zugeordneten Rohrsäule zugewandten Einrastnasen (16) für den Eingriff in die Schlitze (3) der Rohrsäulen (1, 2) enthalten, dass die der bezüglichen Rohrsäule (1, 2) zugewandte Brustfläche (19) des Anschlussgehäuses (8) eine mit der Oberfläche der Rohrsäule (1, 2) komplementäre Oberflächengestalt aufweist, und dass das Anschlussgehäuse (8) und die zugewandte Rohrsäule (1, 2) durch eine die Spannkonsole (13) gegen das Anschlussgehäuse (8) vorspannende Spannvorrichtung (17) in Andruckverbindung stehen.

2. Traggestell nach Anspruch 1, dadurch gekennzeichnet, dass die Spannvorrichtung eine von der Rückseite des Anschlussgehäuses (8) aus zu betätigende Spannschraube (17) ist, die im Anschlussgehäuse (8) abgestützt ist und deren Gewindeschaft mit der Anschlusskonsole im Eingriff steht.

3. Traggestell nach Anspruch 1 oder 2, dadurch gekennzeichnet, dass die Enden der Verbindungsröhren (5, 6) in Passausnehmungen (11) auf der Rückseite des Anschlussgehäuses (8) eingesetzt und durch eine Schraubverbindung (7) gehalten sind.

4. Traggestell nach Anspruch 1, dadurch gekennzeichnet, dass das Anschlussgehäuse (8) auf seiner Oberseite einen die Brustfläche (19) radial einwärts überragenden Sperrnocken (21) enthält, der bei in die zugeordneten Schlitze (3) der Rohrsäulen (1, 2) eingeführten Einrastnocken (16) die obere Schmalseitenwand des von der obersten Einrastnase (16) belegten Schlitzes (3) untergreift.

Fig. 1

Fig. 2

EP 0 389 436 A2

Fig. 3

Fig. 4

EP 0 389 436 A2